# EUROPÄISCHE PATENTSCHRIFT

(11) **EP 1 137 315 B1**
(45) Veröffentlichungstag und Bekanntmachung des Hinweises auf die Patenterteilung: **10.12.2003**
(21) Anmeldenummer: 01104139.9
(22) Anmeldetag: 21.02.2001
(51) Int. Cl.: H04Q 11/04

(54) **Datenübertragung über den ISDN-B-Kanal zwischen einem Endgerät und einem Vermittlungsrechner**
Data transmission via the ISDN B channel between a terminal and a switch processor
Transmission de données via le canal B du RNIS entre un terminal et un processeur de commutation

(30) Priorität: 01.03.2000 DE 10009768
(43) Veröffentlichungstag der Anmeldung: 26.09.2001
(73) Patentinhaber: SIEMENS AKTIENGESELLSCHAFT, 80333 München (DE)
(72) Erfinder: Adli, Wahid, 1220 Wien (AT); Handel, Peter, 80686 München (DE)

(56) Entgegenhaltungen:
- EP-A- 0 261 790
- EP-A- 0 679 319
- WO-A-00/60879
- DE-A- 19 910 468
- US-A- 5 426 634

## Beschreibung

Die vorliegende Erfindung betrifft eine Vermittlungsstelle für ein ISDN-Übertragungssystem, wie sie im Oberbegriff des beigefügten Anspruches 1 beschrieben ist, und ein in dieser Vermittlungsstelle anwendbares Verfahren zur Datenübertragung, wie es im Oberbegriff des beigefügten Anspruches 4 beschrieben ist.

In der EP-A-0 679 319 wird eine ISDN-fähige Fernmeldevermittlungseinrichtung mit programmierbaren Fernmeldediensten vorgestellt. Die Dienste können dabei ohne eine Verminderung der Anzahl der Zeitschlitze dynamisch an jedem beliebigen Anschluss bereitgestellt werden.

Aus der US-A-5 426 634 ist ein ISDN-Vermittlungsprozessor bekannt, der von einem Hauptrechner kontrolliert wird. Durch ein Eingabegerät können dabei die Anwendungen in weiten Bereichen ohne Belastung des Hauptrechners manuell geändert werden.

Beim Stand der Technik werden bestimmte Daten, wie z. B. Statistikdaten, Daten zur Administrierung, Konfigurationsdaten usw., zwischen einem ISDN-Endgerät und einem Vermittlungsrechner in einer Vermittlungsstelle über einen Signalisierungskanal (ISDN-D-Kanal) übertragen.

Der Nachteil dieser Nutzdatenübertragung über den Signalisierungskanal besteht darin, daß die Daten über den D-Kanal lediglich mit einer Übertragungsrate von 500 Byte/s bis 1.000 Byte/s übertragen werden können. Das liegt daran, daß die Datenübertragungskapazität des D-Kanales 2 KByte/s beträgt und daß über diesen Kanal die gesamte Signalisierung (Schicht 3 Meldungen für das sog. Call Processing, unabhängige Datenübertragung) zwischen dem Endgerät und dem Vermittlungsrechner abgewickelt wird. Weiterhin kommt eine Reduzierung der Datenübertragungskapazität von Nutzdaten über den Nutzkanal durch Verzögerungen wegen Laufzeiten, Quittungsmechanismen und dem notwendigen Overhead bei der Datenübertragung zustande.

Die Aufgabe der vorliegenden Erfindung ist somit, eine Technik bereitzustellen, die bei einem ISDN-Übertragungssystem eine höhere Datenübertragung zwischen einem Endgerät und dem Vermittlungsrechner ermöglicht.

Diese Aufgabe wird durch eine Vermittlungsstelle gemäß dem beigefügten Anspruch 1 und ein in dieser Vermittlungsstelle angewendetes Verfahren gemäß dem beigefügten Anspruch 4 gelöst.

Der Vorteil der erfindungsgemäßen Datenübertragung über einen Nutzdatenkanal (ISDN-B-Kanal) besteht darin, dass Daten mit einer Datenübertragungsrate von bis zu 7 KByte/s zwischen einem Endgerät und dem Rechner zur Vermittlungssteuerung übertragen werden können.

Vorteilhafte Ausgestaltungen der vorliegenden Erfindung sind in den Unteransprüchen wiedergegeben.

Das Problem der Datenübertragung zwischen einem Endgerät und dem Rechner zur Vermittlungssteuerung wird gelöst, indem durch den Rechner zur Vermittlungssteuerung ein sog. virtuelles Endgerät bereitgestellt wird. Das bedeutet, dass der Rechner zur Vermittlungssteuerung einen Teilnehmer (bzw. eine Endstelle) simuliert. Eine Verbindung zwischen einem Endgerät eines Teilnehmers und dem erfindungsgemäßen virtuellen Endgerät kann dann nach dem ETSI (European Telecommunications Standards Institute)-Standard aufgebaut werden.

Eine andere Möglichkeit, das Problem der Datenübertragung zu lösen, besteht darin, dass den Rechner zur Vermittlungssteuerung direkt mit dem Nutzdatenkanal der entsprechenden Endstelle der Anschlussbaugruppe verbinden.

Die vorliegende Erfindung wird nachfolgend anhand eines bevorzugten Ausführungsbeispieles unter Bezug auf die beigefügten Zeichnungen näher erläutert, in denen zeigen:
- Fig. 1: eine schematische Darstellung einer Anordnung zur erfindungsgemäßen Datenübertragung des Rechners zur Verbindungssteuerung über einen Nutzdatenkanal,
- Fig. 2: eine schematische Darstellung einer Anordnung zur Datenübertragung zwischen zwei ISDN-Endgeräten, und
- Fig. 3: ein Ausführungsbeispiel der vorliegenden Erfindung.

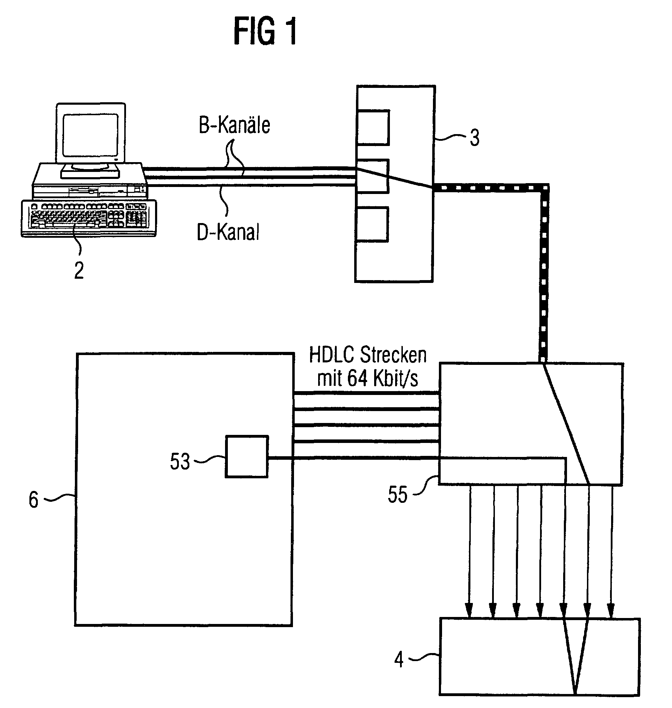

Anhand von Fig. 1 wird nachfolgend die erfindungsgemäße Datenübertragung zwischen dem Rechner zur Vermittlungssteuerung 6 und dem Endgerät 2 eines Teilnehmers über einen Nutzdatenkanal erläutert.

Eine Möglichkeit, die erfindungsgemäße Datenübertragung über einen Nutzdatenkanal zwischen einem ISDN-Endgerät 2 und dem Rechner zur Vermittlungssteuerung 6 zu realisieren, besteht darin, dass von dem Rechner zur Vermittlungssteuerung 6 ein virtuelles Endgerät 53 bereitgestellt wird. Dieses virtuelle Endgerät 53 kann dann von dem ISDN-Endgerät 2 eines Teilnehmers über einen standardisierten Verbindungsaufbau (d.h. über die Anwahl des virtuellen Endgerätes 53 über eine bestimmte Telefonnummer) angesprochen werden.

Der Verbindungsaufbau erfolgt dabei wie in Fig. 1 eingezeichnet vom ISDN-Endgerät 2 über die Anschlussbaugruppe 3, die Übertragungsvorrichtung 55, dem Koppelnetz 4, zurück zur Übertragungsvorrichtung 55 und zum Rechner zur Vermittlungssteuerung 6.

Der Vorteil dieser Möglichkeit besteht darin, dass Verbindungen zur Datenübertragung mit ISDN-Endgeräten, die an beliebigen Vermittlungsstellen angeschlossen sind, hergestellt werden können.

Die zweite Möglichkeit (nicht in Fig. 1 eingezeichnet), die erfindungsgemäße Datenübertragung über einen Nutzdatenkanal zwischen einem ISDN-Endgerät 2 und dem Rechner zur Vermittlungssteuerung 6 zu realisieren, besteht darin, den Rechner zur Vermittlungssteuerung 6 direkt mit dem Nutzdatenkanal der entsprechenden Endstelle der Anschlussbaugruppe zu verbinden.

Der Nachteil der zweiten Lösung besteht jedoch darin, dass hierbei erheblich mehr in die Standardabläufe des Rechners zur Vermittlungssteuerung 6 eingegriffen werden muss. Außerdem lässt sich bei dieser Lösung nur eine Verbindung zur Datenübertragung mit einem Endgerät 2 herstellen, dass sich an einer Anschlussbaugruppe 3 befindet, die an derselben Übertragungsvorrichtung 55 wie der Rechner zur Vermittlungssteuerung 6 angeschlossen ist.

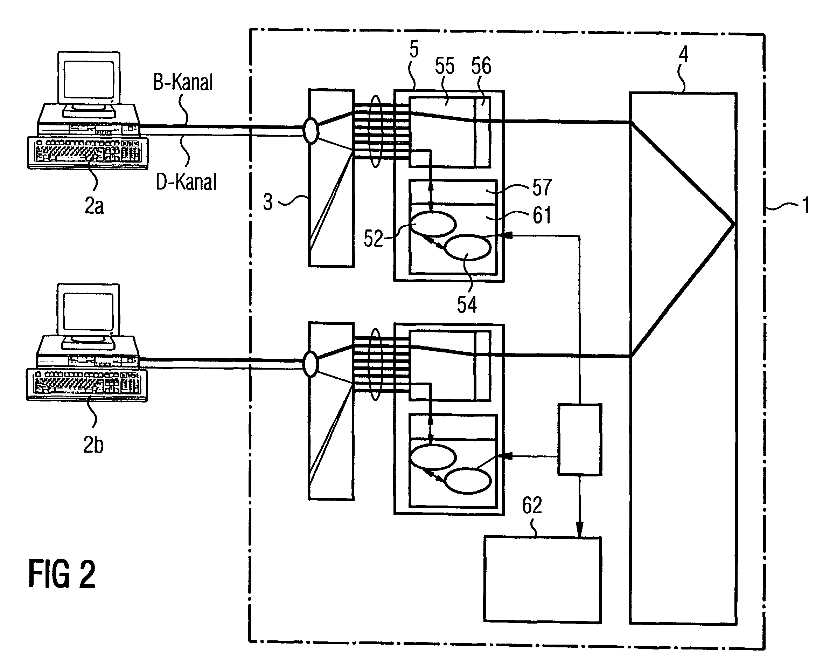

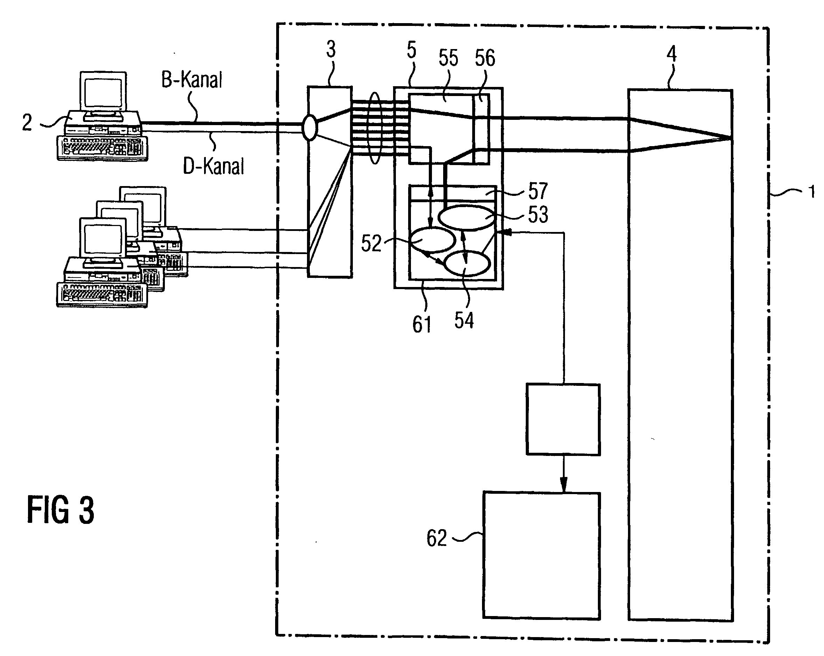

Nachfolgend wird Anhand der Figuren 2 und 3 ein konkretes Anwendungsbeispiel der vorliegenden Erfindung im elektronischen Wählsystem digital (EWSD) der Fa. Siemens AG gezeigt, wobei in Fig. 2 die Anordnung zur Datenübertragung zwischen zwei ISDN-Endgeräten (z. B. PCs) 2a, 2b und in Fig. 3 die erfindungsgemäße Datenübertragung in diesem System erläutert wird.

In diesem System besteht der Rechner zur Vermittlungssteuerung 6 aus zwei Hierarchiestufen, einem sog. Group Processor 61 und einem zentralen Rechner 62, dem sog. Coordination Processor.

Wie aus Fig. 2 zu sehen ist, sind die beiden ISDN-Endgeräte 2a, 2b jeweils über einen sog. ISDN-Basisanschluß an die Vermittlungsstelle 1 angeschlossen. Ein ISDN-Basisanschluß umfasst dabei zwei Nutzdatenkanäle (B-Kanäle) mit je 64 kBit/s Übertragungskapazität und einen Signalisierungskanal (D-Kanal) mit 16 kBit/s Übertragungskapazität.

Die Schnittstelle zur Vermittlungsstelle 1 bildet dabei die Anschlussbaugruppe 3, auch Line-Card oder Digital Line Unit (DLU) genannt. An einer Anschlussbaugruppe 3 sind dabei mehrere Teilnehmer mit ihren Endgeräten (PCs und Telefon) angeschlossen. Den Ausgang der Anschlussbaugruppe 3 bilden ein oder mehrere PCM (Puls Code Modulation)-Leitungen. Über diese PCM-Leitung werden die Nutzkanäle über jeweils einen Zeitschlitz übertragen. Weiterhin findet über einen Zeitschlitz die gesamte Signalisierung der an der Anschlussbaugruppe 3 angeschlossenen Endgeräte mit 64 kBit/s statt.

Die Verbindung zwischen der Anschlussbaugruppe 3 und dem Koppelnetz 4, das die eigentliche Vermittlung und Verbindung zum Übertragungsnetz darstellt, bildet eine sog. Line-Trunk-Group (LTG) 5.

Die Line-Trunk-Group 5 stellt dabei die Verbindung zwischen den Zeitschlitzen der PCM-Leitung auf der Seite der Anschlussbaugruppe 3 und den sog. Speech-Channels des Koppelnetzes 4 auf der anderen Seite mit Hilfe der Übertragungsvorrichtung 55, einem sog. Group-Switch (GS), der die Vermittlungsfunktionen innerhalb der Line-Trunk-Group 5 übernimmt, und der Schnittstelle zu den jeweiligen Speech-Channels, den sog. Line Interface Units (LIU) 56. Der Prozessor 61 (Group Prozessor) übernimmt dabei Aufgaben, die die Verbindungssteuerung der Line-Trunk-Group 5 und den daran angeschlossenen Teilnehmern 2a, 2b betrifft.

Der Übertragungsweg vom Koppelnetz zu einem zweiten Endgerät 2b erfolgt dabei in umgekehrter Reihenfolge.

Beim Stand der Technik kann der beschriebene Verbindungsaufbau jedoch nicht zur Datenübertragung zwischen einem Endgerät 2a und dem Group Processor 61 bzw. dem Coordination Processor 62 über einen Nutzdatenkanal verwendet werden, da durch den normalen Mechanismus einer ISDN-B-Kanalverbindung lediglich zwei Endgeräte miteinander verbunden werden können.

Das Senden von Daten über den D-Kanal erfolgt über einen bestimmten Zeitschlitz auf der PCM-Leitung. Der D-Kanal ist über den Group Switch 55 hardwaremäßig fest mit einem bestimmten HDLC-Port (High Level Data Link Control) einer Schnittstelle 57 (Signalling Link Control, SILC) verbunden. Auf diese Weise können über bestimmte, als Software implementierte, Programmabläufe Daten zwischen einem Endgerät und dem Group Processor 61 bzw. dem Coordination Processor 62 übertragen werden.

Fig. 2 zeigt ein Ausführungsbeispiel, bei dem gezeigt wird, wie Daten zwischen einem Endgerät 2 und dem Group Processor 61 über einen Nutzdatenkanal (B-Kanal) mit einer im Vergleich zum Stand der Technik erhöhten Datenübertragungsrate übertragen werden können.

Erfindungsgemäß wird dabei ein virtuelles Endgerät 53 im Group Processor 61 simuliert, ein sog. Virtual Operator (VOP). Dieser Virtual Operator 53 wird in Group Processor 61 als Software implementiert, die über einen Port der Schnittstelle 57 eine Verbindung mit einem Speech Channel des Koppelnetzes 4 herstellt. Eine Verbindung kann nun von einem ISDN-Endgerät 2 angesprochen werden, das an eine beliebige Vermittlungsstelle 1 angeschlossen ist. Die Verbindung zu dem Virtual Operator kann entsprechend dem ETSI-Standard auf- und abgebaut werden.

Eine weitere Möglichkeit, die erfindungsgemäße Datenübertragung zu realisieren, besteht darin, einen freien Port der Schnittstelle 57 des Group Processors 61 direkt mit einem freien Zeitschlitz der PCM-Leitung zur Anschlussbaugruppe 3 zu verbinden. Jedoch erfordert diese Lösung einen wesentlich größeren Aufwand, da erheblich in die bestehenden Standardabläufe der Software vom Group Processor 61 eingegriffen werden muss.

Um größere Datenmengen zwischen dem Coordination Processor 62 und einem Endgerät 2 zu übertragen, stehen noch die X.25-Schnittstellen des Coordination Processors 62 zur Verfügung. Von diesen Schnittstellen gibt es jedoch nur wenige, die zum größten Teil ausgelastet sind und somit für neue Leistungsmerkmale nicht zur Verfügung stehen.

Die vorliegende Erfindung wird bevorzugt im EWSD (Elektronischen Wählsystem Digital) im Bereich von ADMOSS (Advanced Multifunctional Operator Service System) oder Centrex-MAC (Centrex Multifunctional Attendand Console) eingesetzt.

Mit der vorliegenden Erfindung können Massendaten wie z. B. Statistikdaten, Administrierungsdaten, Gebührendaten, Konfigurationsdaten usw. dieser Systeme zwischen einem Endgerät und einer Vermittlungsstelle mit einer höheren Datenübertragungsrate (bis 7 KByte/s) als bisher übertragen werden.

## Patentansprüche

1. Vermittlungsstelle (1) für ein ISDN-Übertragungssystem, bei dem Nutzdaten über wenigstens einen Nutzdatenkanal und Signalisierungsdaten über einen Signalisierungskanal übertragen werden, mit
einer Anschlußbaugruppe (3) zum Anschluß von ISDN-Endgeräten (2) an die Vermittlungsstelle (1),
einem Koppelnetz (4) zum Verbinden von Nutzdatenkanälen miteinander,
einer Übertragungsvorrichtung (55) zum Übertragen von Daten zwischen der Anschlußbaugruppe (3) und dem Koppelnetz (4), und
einen Rechner zur Vermittlungssteuerung (6),
**dadurch gekennzeichnet,**
**daß** der Rechner zur Vermittlungssteuerung (6) ein virtuelles ISDN-Endgerät (53) für eine Datenübertragung über einen Nutzkanal bereitstellt, zu dem eine Verbindung durch einen standardisierten Verbindungsaufbau, ausgehend von einem ISDN-Endgerät (2) über das Koppelnetz (4) herstellbar ist.

2. Vermittlungsstelle (1) gemäß Anspruch 1,
**dadurch gekennzeichnet,**
**daß** der Rechner zur Vermittlungssteuerung (6) direkt mit einem Nutzdatenkanal der Anschlußbaugruppe (3) verbunden ist.

3. Verfahren zur Datenübertragung in einer Vermittlungsstelle (1) für ein ISDN-Übertragungssystem, bei dem Nutzdaten über wenigstens einen Nutzdatenkanal und Signalisierungsdaten über einen Signalisierungskanal übertragen werden, mit
einer Anschlußbaugruppe (3) zum Anschluß von Endgeräten (2) an die Vermittlungsstelle (1),
einem Koppelnetz (4) zum Verbinden von Nutzdatenkanälen miteinander,
einer Übertragungsvorrichtung (55) zum Übertragen von Daten zwischen der Anschlußbaugruppe (3) und dem Koppelnetz (4), und
einem Rechner zur Vermittlungssteuerung (6),
**dadurch gekennzeichnet,**
**daß** der Rechner zur Vermittlungssteuerung (6) als virtuelles Endgerät (53) angesprochen wird, zu dem, ausgehend von einem Endgerät (2) eine Verbindung für eine Datenübertragung über einen Nutzkanal durch einen standardisierten Verbindungsaufbau hergestellt wird.

4. Verfahren gemäß Anspruch 3,
**dadurch gekennzeichnet,**
**daß** der Rechner zur Vermittlungssteuerung (6) direkt mit einem Nutzdatenkanal der Anschlußbaugruppe (3) verbunden wird.

## Claims

1. Switching centre (1) for an ISDN transmission system in which user data are transmitted via at least one user data channel and signalling data are transmitted via a signalling channel having,
a subscriber line module (3) for connecting ISDN terminals (2) to the switching centre (1),
a switching matrix (4) for connecting user data channels to one another,
a transmission apparatus (55) for transmitting data between the subscriber line module (3) and the switching matrix (4) and
a computer for call-processing control (6),
**characterized**
**in that** the computer for call-processing control (6) provides a virtual ISDN terminal (53) for data transmission via a user channel to which it is possible to set up a connection from an ISDN terminal (2) via the switching matrix (4) by means of standardized connection set-up.

2. Switching centre (1) according to Claim 1,
**characterized**
**in that** the computer for call-processing control (6) is connected directly to a user data channel in the subscriber line module (3).

3. Method for data transmission in a switching centre (1) for an ISDN transmission system in which user data are transmitted via at least one user data channel and signalling data are transmitted via a signalling channel, having
a subscriber line module (3) for connecting terminals (2) to the switching centre (1),
a switching matrix (4) for connecting user data channels to one another,
a transmission apparatus (55) for transmitting data between the subscriber line module (3) and the switching matrix (4), and
a computer for call-processing control (6),
**characterized**
**in that** the computer for call-processing control (6) is addressed as a virtual terminal (53) to which it is possible to set up, from a terminal (2), a connection for data transmission via a user channel by means of standardized connection set-up.

4. Method according to Claim 3,
**characterized**
**in that** the computer for call-processing control (6) is connected directly to a user data channel in the subscriber line module (3).

## Revendications

1. Central téléphonique (1) pour un système de transmission du RNIS avec lequel des données utiles sont transmises au moyen d'au moins un canal de données utiles et des données de signalisation sont transmises au moyen d'un canal de signalisation, avec
un ensemble de raccordement (3) pour le raccordement d'appareils terminaux du RNIS (2) au central téléphonique (1)
un réseau de connexion (4) pour la liaison de canaux de données utiles entre eux,
un dispositif de transmission (55) pour la transmission de données entre l'ensemble de raccordement (3) et le réseau de connexion (4), et
un ordinateur pour la commande du poste opérateur (6)
**caractérisé en ce que**
l'ordinateur pour la commande du poste opérateur (6) met à disposition un appareil terminal du RNIS (53) virtuel pour une transmission de données au moyen d'un canal utile, pour lequel on peut établir une liaison par un établissement de communications standardisé à partir d'un appareil terminal du RNIS (2) au moyen du réseau de connexion (4).

2. Central téléphonique (1) selon la revendication 1,
**caractérisé en ce que**
l'ordinateur pour commande du poste opérateur (6) est relié directement à un canal de données utiles de l'ensemble de raccordement (3).

3. Procédé pour la transmission de données dans central téléphonique (1) pour un système de transmission du RNIS, avec lequel des données utiles sont transmises au moyen d'au moins un canal de données utiles et des données de signalisation sont transmises au moyen d'un canal de signalisation, avec un ensemble de raccordement (3) pour le raccordement d'appareils terminaux (2) au central téléphonique (1),
un réseau de connexion (4) pour la liaison entre des canaux de données utiles, un dispositif de transmission (55) pour la transmission des données entre l'ensemble de raccordement (3) et le réseau de connexion (4), et
un ordinateur pour la commande du poste opérateur (6)
**caractérisé en ce que**
l'ordinateur pour la commande du poste opérateur (6) est déclenché comme un appareil terminal (53) virtuel, pour lequel on établit à partir d'un appareil terminal (2) une liaison pour une transmission de données au moyen d'un canal utile par un établissement de communications standardisé.

4. Procédé selon la revendication 3,
**caractérisé en ce que**
l'ordinateur pour la commande du poste opérateur (6) est relié directement à un canal de données utiles de l'ensemble de raccordement (3).
